# EUROPÄISCHE PATENTANMELDUNG

(11) **EP 1 712 808 A2**
(43) Veröffentlichungstag der Anmeldung: **18.10.2006**
(21) Anmeldenummer: 06006985.3
(22) Anmeldetag: 31.03.2006
(51) Int. Cl.: F16D 13/64, F16D 69/04

(54) **Kupplungsscheibe für eine Kupplungseinrichtung und Verfahren zur Herstellung einer solchen Kupplungsscheibe**

(30) Priorität: 16.04.2005 DE 102005017595
(71) Anmelder: ZF FRIEDRICHSHAFEN AG, 88046 Friedrichshafen (DE)
(72) Erfinder: Worttmann, Rainer, A-2460 Bruck an der Leitha (AT); Buer, Gerald, 96172 Mühlhausen (DE); Radic, Anita, 97421 Schweinfurt (DE); Schmitt, Norbert, 97616 Bad Neustadt (DE); Jeppe, Harald, 97422 Schweinfurt (DE)

(57) **Zusammenfassung**

Die Erfindung betrifft eine Kupplungsscheibe (1) für eine Kupplungseinrichtung, insbesondere für eine Kraftfahrzeugkupplungseinrichtung, umfassend einen um eine Drehachse (2) herum angeordneten und im wesentlichen scheibenförmig ausgebildeten Belagträger (3), an dem, vorzugsweise an beiden seiner Stirnseiten (4, 5), mindestens ein Reibbelag (6) befestigt ist. Um das Verschleißvolumen des Reibbelags so gut wie möglich ausnutzen zu können, ist erfindungsgemäß vorgesehen, dass der Reibbelag (6) ein Trägerelement (7) aufweist, das von Reibmaterial (8) zumindest teilweise umgeben ist, wobei das Trägerelement (7) mit dem Belagträger (3) verbunden ist.

## Beschreibung

Die Erfindung betrifft eine Kupplungsscheibe für eine Kupplungseinrichtung, insbesondere für eine Kraftfahrzeugkupplungseinrichtung, umfassend einen um eine Drehachse herum angeordneten und im wesentlichen scheibenförmig ausgebildeten Belagträger, an dem, vorzugsweise an beiden seiner Stirnseiten, mindestens ein Reibbelag befestigt ist. Des weiteren betrifft die Erfindung ein Verfahren zur Herstellung einer solchen Kupplungsscheibe.

Kupplungsscheiben dieser Art sind im Stand der Technik bekannt und beispielsweise in der US 2,502,653, in der EP 0 554 472 B9, in der DE 195 14 817 A1 und in der DE 195 49 388 A1 beschrieben. Eine solche Kupplungsscheibe hat einen um eine Drehachse herum angeordneten und im wesentlichen scheibenförmig oder ringscheibenförmig ausgebildeten Belagträger (auch Belagfeder genannt), der vorzugsweise an beiden Stirnseiten mit einem Reibbelag versehen ist. Die Reibbeläge sind gemäß den vorbekannten Lösungen bevorzugt mittels Nieten mit dem Belagträger verbunden.

Die Kupplungsscheibe wird in der Kupplungseinrichtung zwischen einer Anpressplatte und einem Schwungrad angeordnet. Durch Beaufschlagung der Anpressplatte mit einer axial wirkenden Kraft wird Reibschluss zwischen Anpressplatte, Kupplungsscheibe und Schwungrad hergestellt, wodurch ein Drehmoment übertragen werden kann. Dabei wirkt zwischen zwei Reibpartnern, also einerseits zwischen der Anpressplatte und der Kupplungsscheibe und andererseits zwischen der Kupplungsscheibe und dem Schwungrad, eine Reibkraft, die sich aus dem Produkt aus Anpresskraft und Reibkoeffizient ergibt.

Die Reibbeläge bestehen gemäß den vorbekannten Lösungen aus Reibmaterial, das entweder im sog. Scatterwound-Verfahren oder spiralförmig gewickelt wird und dann durch einen Pressvorgang verdichtet und in die endgültige Form gebracht wird, so dass sich ein fester Block ergibt, der mit dem Belagträger vernietet werden kann.

Ziel bei der Gestaltung einer Kupplungsscheibe ist dabei, sie so auszubilden, dass ein möglichst hohes Verschleißvolumen des Reibmaterials zur Verfügung steht und die Kupplungsscheibe am Ende der Lebensdauer nur noch ein möglichst geringes Restvolumen Reibmaterial aufweist. An der Reibfläche des Reibmaterials mit seinem Reibpartner kann der Reibbelag bis auf ca. 1,5 bis 1,8 mm Restdicke verschlissen werden, bevor der Reibbelag instabil wird. Bei vielen Lösungen kann eine solch niedrige Restdicke des Reibmaterials jedoch nicht erreicht werden, da dem die Nieten im Wege stehen, die eine bestimmte minimale Erstreckung haben müssen.

Aus den vorgenannten Lösungen gemäß der EP 0 554 472 B9, der DE 195 14 817 A1 und der DE 195 49 388 A1 ist es bekannt, diesen Nachteil dadurch zu vermindern, dass der Reibbelag radial nach innen aus dem Bereich der Reibfläche herausgezogene Bereiche bzw. Zungen aufweist, in denen die Nietung erfolgt. Das Vernieten erfolgt also außerhalb der Reibfläche. Die Reibbeläge können dadurch bis zur genannten optimalen Restdicke verschlissen werden. Am Lebensdauerende ist jedoch noch im Bereich der radial herausgezogenen Bereiche bzw. Zungen unverschlissenes Material vorhanden, das verloren ist. Dies bedeutet einen entsprechenden wirtschaftlichen Nachteil, da die Reibbeläge einen großen Kostenanteil an der gesamten Kupplungsscheibe haben.

Bekannt ist es zwar auch, die Reibbeläge auf dem Belagträger aufzukleben, wodurch ein hohes Verschleißvolumen Reibmaterial zur Verfügung steht. Allerdings ist eine solche Lösung wegen der erforderlichen Prozessgenauigkeit und des aufwändigen Arbeitsgangs relativ kostenintensiv.

Der Erfindung liegt daher die **Aufgabe** zugrunde, eine Kupplungsscheibe der eingangs genannten Art und ein entsprechendes Herstellverfahren so fortzubilden, dass - ohne Einsatz des Klebeverfahrens - das am Lebensdauerende nicht verschlissene Reibmaterial des Reibbelags weiter minimiert werden kann. Dabei soll auch erreicht werden, dass die Restdicke des Reibbelags so weit wie möglich minimiert werden kann, um soweit wie möglich alles Reibmaterial ausnutzen zu können. Das Verschleißvolumen soll also so weit wie möglich vergrößert werden. Somit soll die Wirtschaftlichkeit erhöht werden. Ferner soll die Berstdrehzahl der Kupplungsscheibe hoch sein und durch die erfindungsgemäßen Maßnahmen im Vergleich mit vorbekannten Lösungen nicht herabgesetzt werden.

Die **Lösung** dieser Aufgabe durch die Erfindung ist dadurch gekennzeichnet, dass der Reibbelag ein Trägerelement aufweist, das von Reibmaterial zumindest teilweise umgeben ist, wobei das Trägerelement mit dem Belagträger verbunden ist.

Dabei ist bevorzugt vorgesehen, dass das Trägerelement, gegebenenfalls abgesehen von seinem radial innenliegenden oder radial außenliegenden Bereich, vollständig von Reibmaterial umgeben ist.

Das Trägerelement ist dabei bevorzugt zumindest weitgehend eben ausgebildet; allerdings kann es auch vorteilhaft sein, wenn es eine leicht wellige Form aufweist.

Das Trägerelement besteht dabei insbesondere aus hochfestem Material, wobei bevorzugt an Stahl gedacht ist.

Der Erfindungsgedanke stellt also darauf ab, dass der Reibbelag, der im Stand der Technik gänzlich aus gepresstem Reibmaterial besteht, ein inkorporiertes Trägerelement - bevorzugt aus Stahl - aufweist, das mit Reibmaterial umgeben bzw. umhüllt ist. Das Trägerelement wird dann mit dem Belagträger verbunden.

Bevorzugt ist dabei vorgesehen, dass das Trägerelement und der Belagträger mittels einer Nietverbindung miteinander verbunden sind. Hierzu kann das Trägerelement mindestens eine Öse zum Durchtritt eines Niets aufweisen. Die mindestens eine Öse ist dabei bevorzugt radial innerhalb oder radial außerhalb der Reibfläche des Reibbelags angeordnet.

Die Reibfläche bildet bevorzugt eine Ringfläche oder ein Ringflächensegment. Das Trägerelement hat in vorteilhafter Weise eine weitgehend kreisringförmige Kontur; möglich ist es auch, dass das Trägerelement die Form eines Kreisringsegments aufweist und eine Anzahl derartiger Kreisringsegmente am Belagträger fixiert sind.

Vorteilhaft ist es, die Geometrie des Trägerelements so zu wählen, dass dieses nicht aus einem flächigen Blech mit ungestörter Oberfläche besteht, sondern dass das Trägerelement mindestens eine Ausnehmung, vorzugsweise eine Anzahl Ausnehmungen, aufweist. Dabei weist das Trägerelement bevorzugt dieses vollständig durchsetzende Schlitze auf.

Eine diesbezügliche Ausgestaltung sieht vor, dass eine Anzahl Ausnehmungen vorhanden sind, die sich über einen Teil der radialen Erstreckung des Trägerelements radial vom äußeren Durchmesser des Trägerelements nach innen erstrecken. Es können auch eine Anzahl Ausnehmungen vorhanden sein, die sich über einen Teil der radialen Erstreckung des Trägerelements radial vom inneren Durchmesser des Trägerelements nach außen erstrecken. Es ist auch die Kombination beider Ausgestaltungen möglich, d. h. sowohl radial nach innen als auch radial nach außen laufende Ausnehmungen. Am Ende der Ausnehmungen können dabei kreisförmig ausgebildete Erweiterungen angeordnet sein. Eine Variation sieht sich radial nach innen erstreckende und sich radial nach außen erstreckende Ausnehmungen - über den Umfang des Trägerelements abwechselnd angeordnet - vor.

Eine alternative Ausgestaltung der Ausnehmungen sieht vor, dass eine Anzahl Ausnehmungen vorhanden ist, die - in Achsrichtung des Trägerelements betrachtet - mäanderförmig verlaufen, wobei sich der mäanderförmige Verlauf über einen Teil der radialen Erstreckung des Trägerelements ausdehnt.

Weiterhin kann vorgesehen sein, dass eine Anzahl Ausnehmungen vorhanden ist, die - in Achsrichtung des Trägerelements betrachtet - eine U-förmige Kontur aufweisen. Die U-förmig ausgebildeten Ausnehmungen können dabei gleichsinnig oder abwechselnd gegensinnig über den Umfang des Trägerelements angeordnet sein.

Sich radial erstreckende und U-förmig ausgebildete Ausnehmungen können auch über den Umfang des Trägerelements abwechselnd angeordnet sein.

Die Ausnehmungen sind vorzugsweise durch einen Stanzvorgang hergestellt.

Das Verfahren zur Herstellung der vorbeschriebenen Kupplungsscheibe mit einem im wesentlichen scheibenförmig ausgebildeten Belagträger und mindestens einem Reibbelag ist erfindungsgemäß dadurch gekennzeichnet, dass der Reibbelag hergestellt wird durch
a) Einlegen eines Trägerelements in ein Presswerkzeug,
b) Umgeben des Trägerelements mit Reibmaterial und
c) anschließendes Pressen des Reibmaterials und des Trägerelements, so dass eine feste Verbindung zwischen Reibmaterial und Trägerelement entsteht.

Bevorzugt ist vorgesehen, dass das Reibmaterial und das Trägerelement bei Schritt c) auf eine gegenüber der Umgebungstemperatur erhöhte Temperatur gebracht werden.

Das Trägerelement, insbesondere das Trägerblech, wird also in das Presswerkzeug eingelegt und vor dem Pressen mit dem Reibmaterial umgeben. Der Press- und Aushärtevorgang reicht aus, um eine dauerhafte Verbindung zwischen dem Trägerblech und dem Belag herzustellen.

Die Erhöhung des Massenträgheitsmoments durch das Trägerelement wird durch die Möglichkeit, die Belagdicke nur unwesentlich größer als das Verschleißvolumen ausführen zu können und insbesondere auch durch das Einbringen der genannten Ausnehmungen in das Trägerelement, mehr als kompensiert. Insgesamt lässt sich mit dem vorgeschlagenen Verbund aus Reibmaterial und Trägerelement sogar eine Reduzierung der Masse und des Massenträgheitsmoments erreichen.

Die genannten Ausnehmungen (Schlitze) haben in vorteilhafter Weise auch zur Folge, dass die Spannungen, die durch den Press- und Schrumpfungsprozess in den Verbund gelangen, minimiert werden können.

Die Herstellung der Kupplungsscheibe ist mit dem erfindungsgemäßen Vorschlag in kostengünstigerer Weise möglich, da das Volumen des benötigten Reibmaterials deutlich reduziert werden kann. Weitere Arbeitsgänge (wie Bohren der Beläge) können entfallen.

In der Zeichnung sind Ausführungsbeispiele der Erfindung dargestellt. Es zeigen:
- Fig. 1: die Seitenansicht einer Kupplungsscheibe für eine Kraftfahrzeugkupplungseinrichtung,
- Fig. 2: ein kreisringsegmentartig ausgebildetes Trägerelement der Kupplungsscheibe in der Seitenansicht,
- Fig. 3: das Trägerelement gemäß dem Schnitt A-A nach Fig. 2,
- Fig. 4: eine perspektivische Darstellung des an dem Belagträger festzulegenden Reibbelags aus Fig. 1,
- Fig. 5: eine perspektivische. Darstellung des Reiblzelags nach Fig. 4, wobei das Trägerelement und das Reibmaterial voneinander getrennt dargestellt sind,
- Fig. 6: eine zu Fig. 1 alternative Ausgestaltung der Kupplungsscheibe,
- Fig. 7: die perspektivische Darstellung einer zu Fig. 6 ähnlichen Kupplungsscheibe,
- Fig.8: ein zu Fig. 2 alternativ gestaltetes kreisringsegmentartig ausgebildetes Trägerelement der Kupplungsscheibe in der Seitenansicht,
- Fig. 9: das Trägerelement gemäß dem Schnitt A-A nach Fig. 8,
- Fig. 10: die eine Hälfte des Trägerelements in der Seitenansicht mit eingestanzten Ausnehmungen,
- Fig. 11: die eine Hälfte des am Trägerelement festzulegenden Reibmaterials in der Seitenansicht,
- Fig. 12: die eine Hälfte des Trägerelements in der Seitenansicht in einer zu Fig. 10 alternativen Ausführung,
- Fig. 13: die eine Hälfte des Trägerelements in der Seitenansicht in einer zu Fig. 10 weiteren alternativen Ausführung,
- Fig. 14: die eine Hälfte des Trägerelements in der Seitenansicht in einer zu Fig. 10 weiteren alternativen Ausführung,
- Fig. 15: die eine Hälfte des Trägerelements in der Seitenansicht in einer zu Fig. 10 weiteren alternativen Ausführung,
- Fig. 16: die eine Hälfte des Trägerelements in der Seitenansicht in einer zu Fig. 10 weiteren alternativen Ausführung,
- Fig. 17: die eine Hälfte des Trägerelements in der Seitenansicht in einer zu Fig. 10 weiteren alternativen Ausführung,

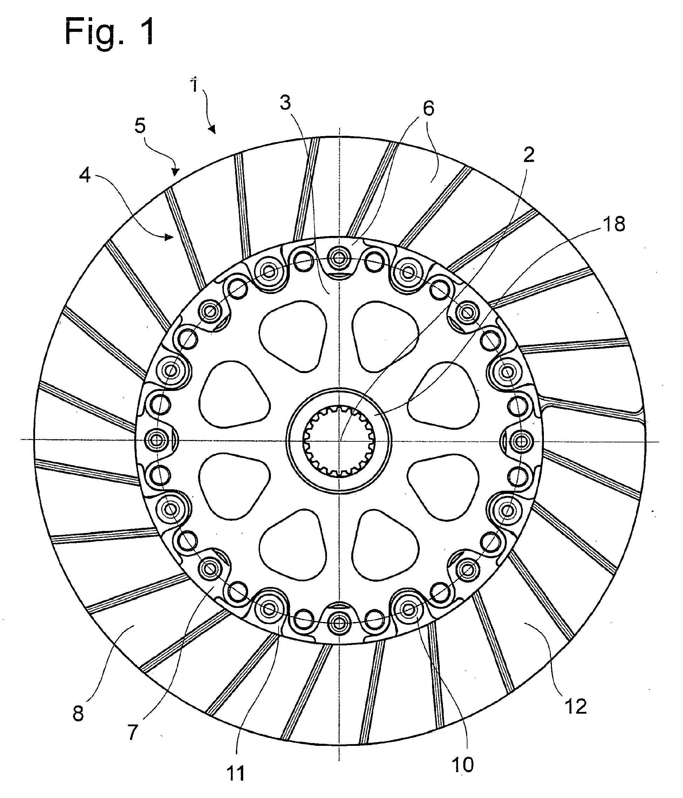

In Fig. 1 ist eine Kupplungsscheibe 1 dargestellt, die in einer Kupplungseinrichtung zwischen einer Anpressplatte und einem Schwungrad angeordnet wird. Die Kupplungsscheibe 1 rotiert dabei im Betrieb um die Drehachse 2. Zur Aufnahme auf einer nicht dargestellten Welle weist die Kupplungsscheibe 1 im Bereich der Drehachse 2 ein Nabenteil 18 mit Vielkeil-Innenprofil auf. Die Kupplungsscheibe 1 ist dabei im wesentlichen zweiteilig ausgebildet. Sie hat einen Belagträger 3 mit im wesentlichen kreisscheibenförmiger bzw. kreisringförmiger Gestalt, an dem Reibbeläge 6 an beiden Stirnseiten 4 und 5 festgelegt sind. Die Festlegung erfolgt mit Nieten 10, wozu der Reibbelag 6 Ösen 11 aufweist, die radial nach innen aus dem Bereich der Reibfläche 12 des Reibbelags 6 herausverlegt sind, so dass die Reibfläche 12 nicht durch die Nieten 10 gestört wird, was insbesondere bei fortschreitendem Verschleiß des Reibmaterials 8 problematisch wäre.

Wie noch in den weiteren Darstellungen gesehen werden wird, ist der Reibbelag 6 zweiteilig ausgebildet. Er hat ein Trägerelement 7 aus Stahlblech, das vom Reibmaterial 8 umgeben ist. Trägerelement 7 und Reibmaterial 8 bilden dabei infolge des Herstellvorganges einen festen Verbund.

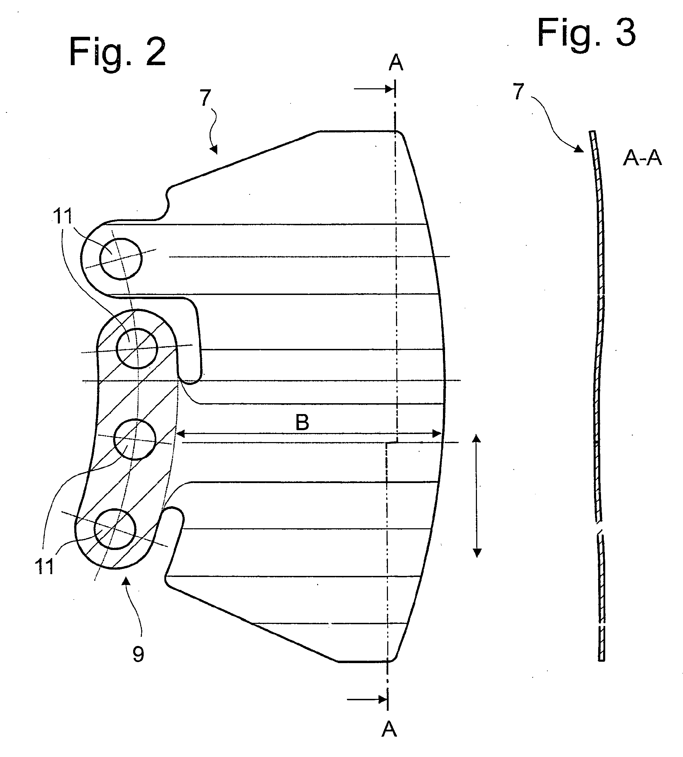

Das Trägerelement 6 kann als Kreisringscheibe ausgeführt sein. In Fig. 2 ist eine alternative Ausgestaltung dahingehend zu sehen, dass das Trägerelement 6 ein Kreisringsegment abdeckt, so dass über den Umfang des Belagträgers 3 eine Anzahl derartiger Trägerelemente 7 angeordnet, d. h. festgenietet werden. Gut zu erkennen ist in Fig. 2, dass die Ösen 11, die für das Festnieten des Trägerelements 7 am Belagträger 3 benötigt werden, im radial innenliegenden Bereich 9 des Trägerelements 7 radial nach innen aus dem Bereich B der radialen Erstreckung des Trägerelements 7 herausgezogen sind, so dass die Nieten nicht radial innerhalb der radialen Erstreckung B zu liegen kommen und bei fortschreitendem Verschleiß des Reibmaterials 8 damit nicht stören. Damit kann das Reibmaterial 8 bis fast auf das Trägerelement 7 abgenutzt werden. Lediglich eine minimale Restwandstärke ist zur sicheren Funktion der Kupplung erforderlich.

Um diesen Vorteil nutzen zu können, sind also die Nietverbindungen außerhalb der Reibfläche 12 angeordnet. Dargestellt ist das Herausziehen der Ösen in den Bereich des Innendurchmessers. Genauso ist es auch möglich, dass die Ösen radial nach außen in den Bereich des Außendurchmessers herausgezogen werden können.

In Fig. 3 ist der Schnitt A-A gemäß Fig. 2 zu sehen, aus dem hervorgeht, dass das Trägerelement 7 eine leicht wellige Form haben kann.

Wie in Fig. 2 und Fig. 3 gesehen werden kann, legt man bevorzugt die eine Nietstelle bei einem Belagträger (Belagfeder), der nur einfach verbaut wird, vorzugsweise zwischen die beiden Befestigungsbohrungen des Trägerelements 7. Bei der Anordnung der Bohrung des gegenüberliegenden Trägerbleches bietet sich eine radiale Verlängerung des Belagträger-Flügels an der Stelle der höchsten Biegung (vorteilhaft ist die Ausbildung eines Plateaus) nach innen oder außen an.

Die weiteren Figuren zeigen bevorzugte und teilweise alternative Ausgestaltung der Erfindung.

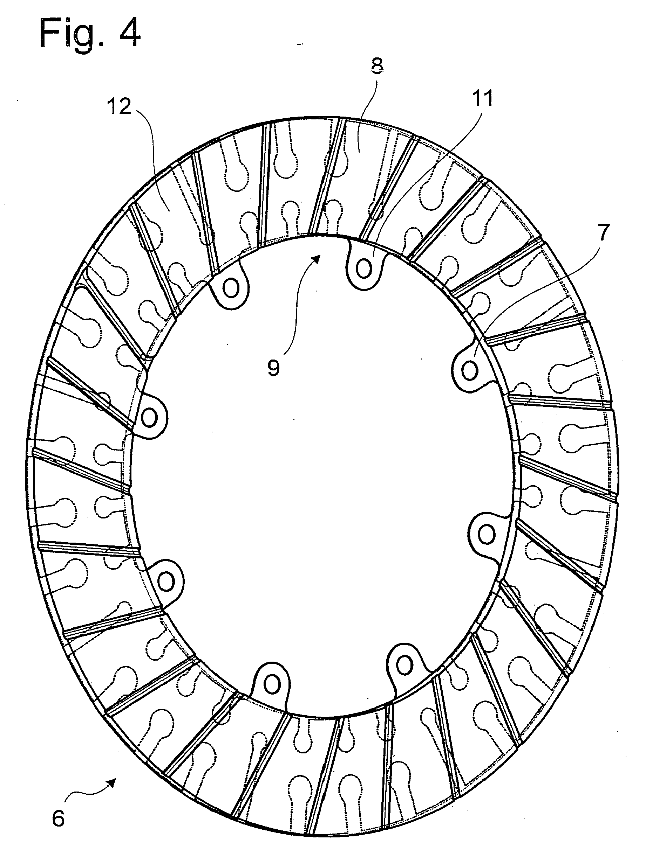

In Fig. 4 ist ein Reibbelag 6 - bestehend aus Trägerelement 7 und Reibmaterial 8 - zu sehen, von dem je einer an jeder Stirnseite 4, 5 des Belagträgers 3 festgenietet wird.

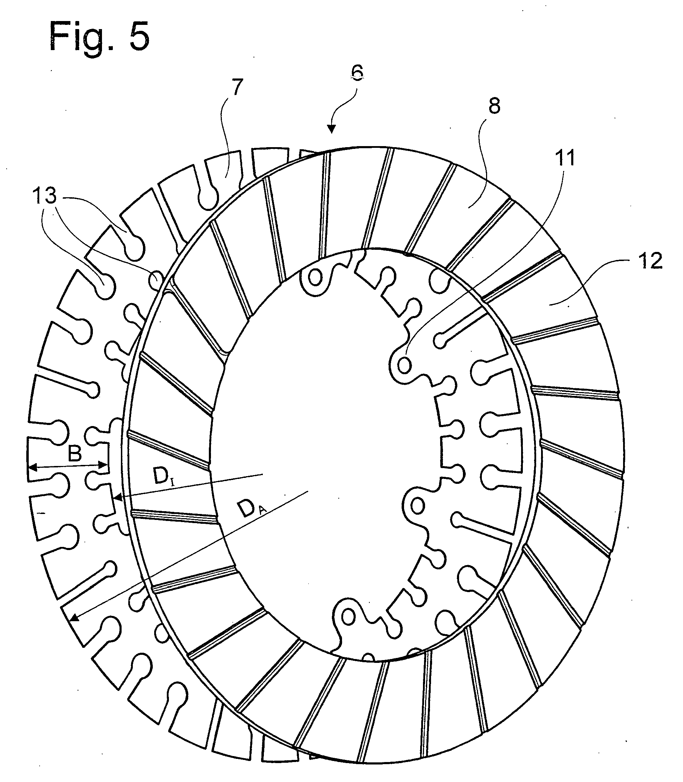

Aus Fig. 5 geht hervor, wie sich das Trägerelement 7 im wesentlichen zwischen einem äußeren Durchmesser D_{A} und einem inneren Durchmesser D_{I} erstreckt und dabei eine radiale Erstreckung B aufweist.

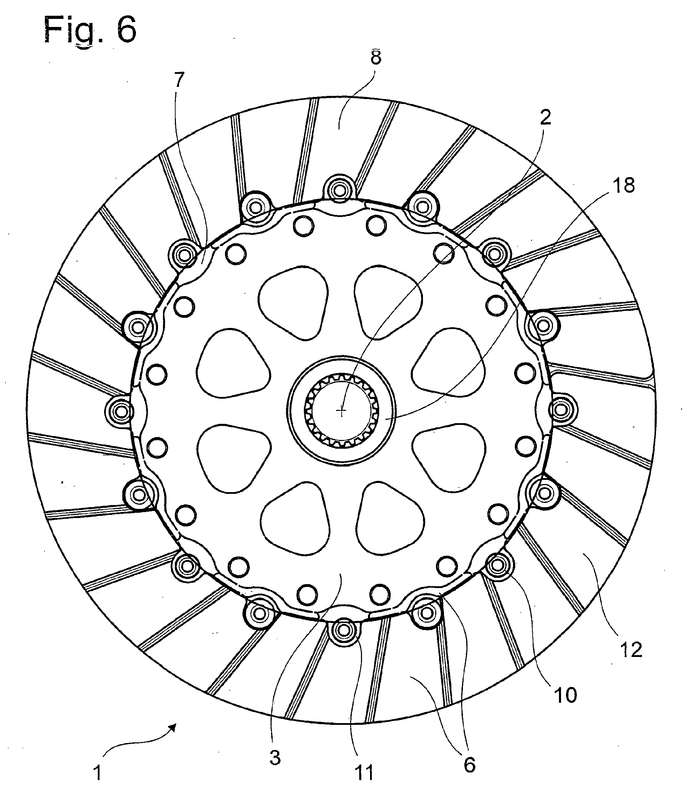

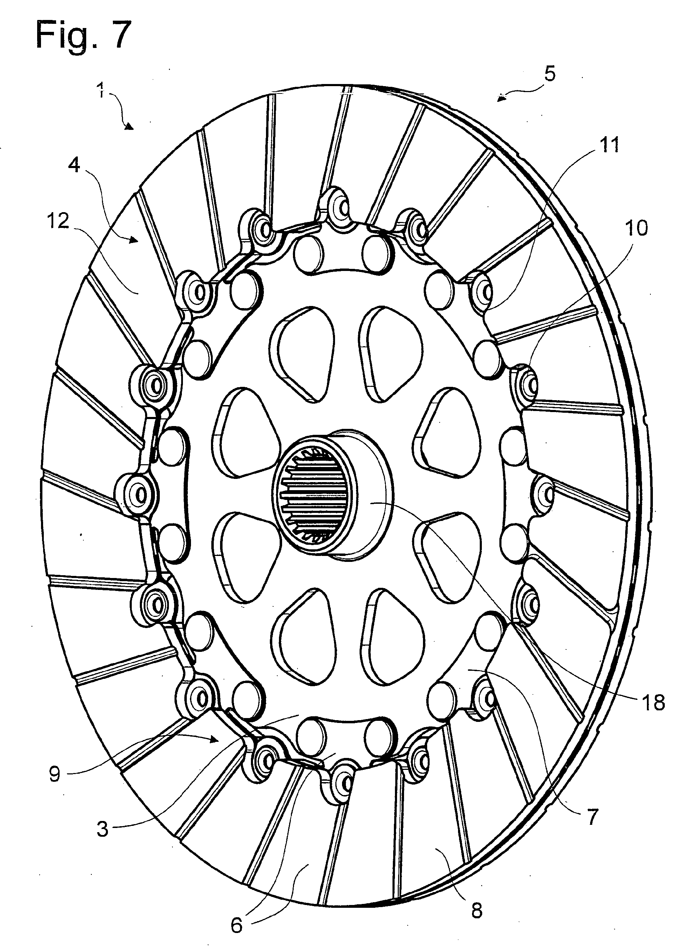

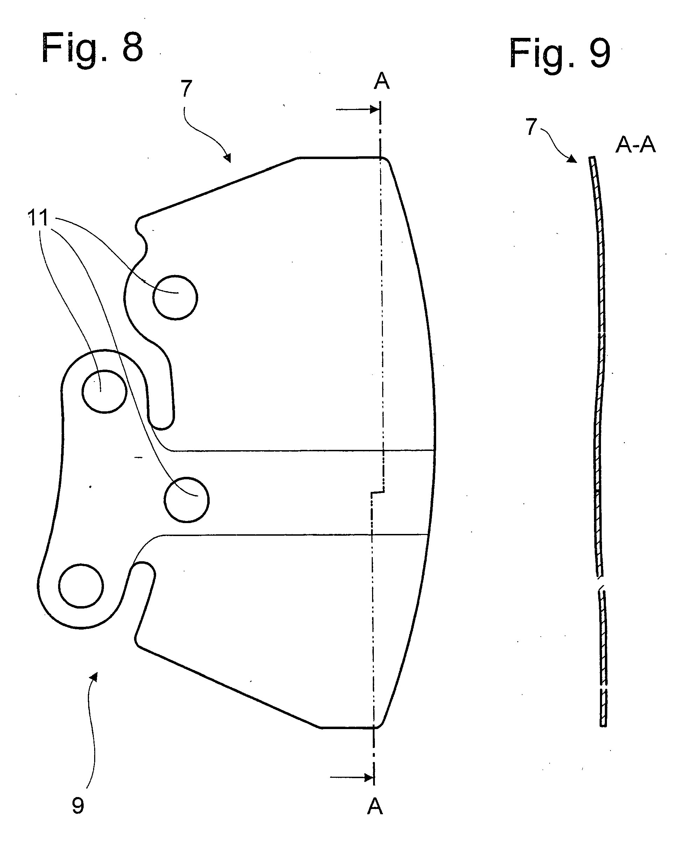

Ist der Bauraum radial nach innen begrenzt, ist auch eine teilweise Verlagerung der Vernietung in den Bereich der Reibfläche 12 möglich, wie es aus den Figuren 6 bis 9 hervorgeht. Bei dieser Ausgestaltung entspricht die verbleibende Restdicke des Reibmaterials dann jedoch mindestens der Höhe des Nietkopfes. Da die Nietkopfhöhe normalerweise größer ist als die minimale geometrisch notwendige Restwanddicke des Reibmaterials 8, kann bei dieser Variante das Reibmaterial 8 meist nicht optimal genutzt werden.

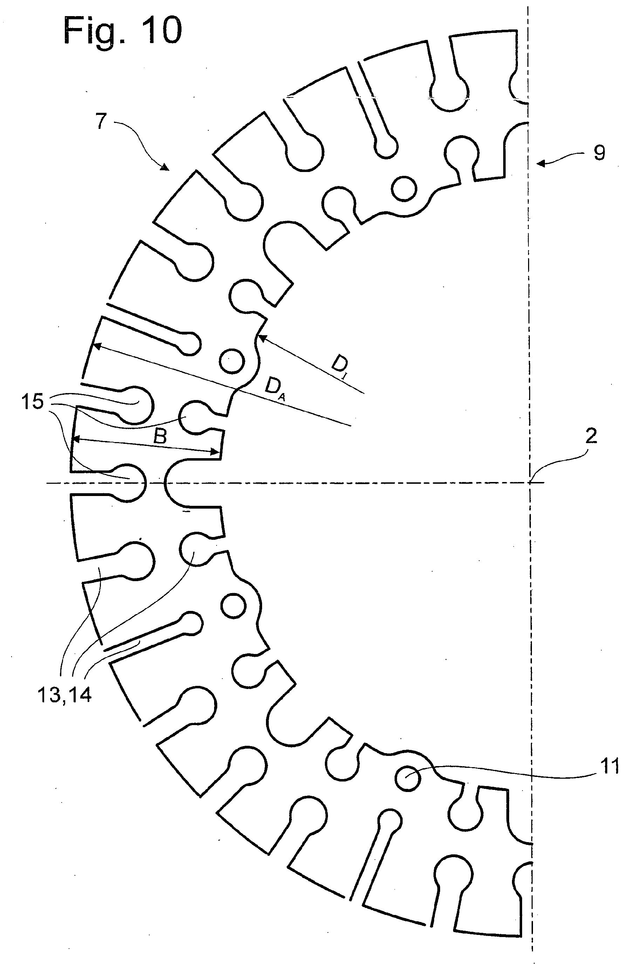

In Fig. 10 ist ein Trägerelement 7 zu sehen, das mit einer Anzahl Ausnehmungen 13 versehen ist, mit denen die oben erwähnten Vorteile (Spannungsarmmut, geringes Gewicht, geringes Massenträgheitsmoment) erzielt werden können. Die Ausnehmungen 13 sind als in das Blech des Trägerelements 7 eingestanzte Schlitze ausgebildet. Dabei erstrecken sich radial erstreckende Ausnehmungen 14 sowohl vom Außendurchmesser D_{A} nach innen als auch vom Innendurchmesser D_{I} nach außen. Am Ende der radial eingebrachten Schlitze 14 sind kreisförmig ausgebildete Erweiterungen 15 angeordnet, d. h. Verbreiterungen der Schlitze am Schlitzende, um Spannungen gering halten zu können.

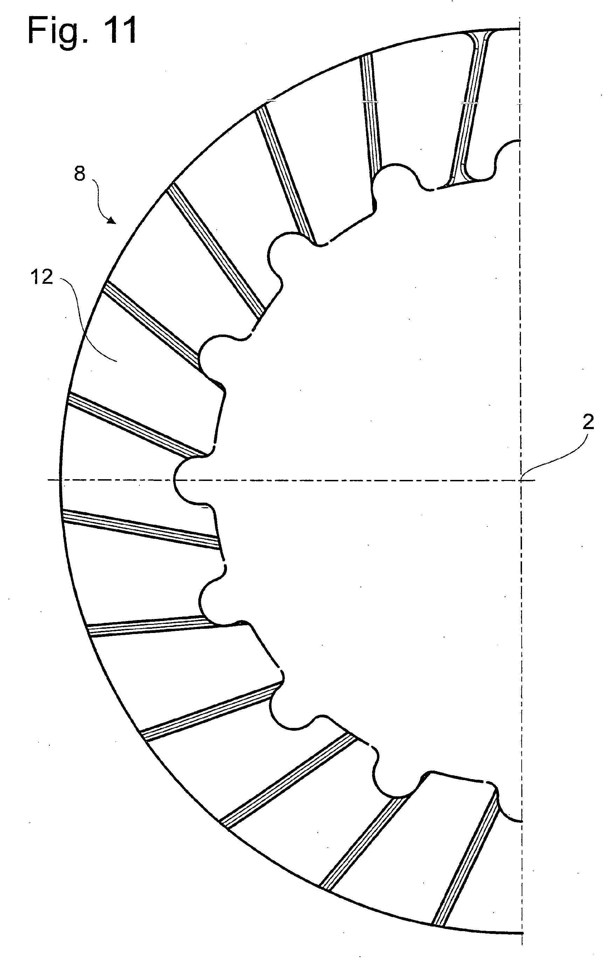

Auf das Trägerelement 7 gemäß Fig. 10 ist Reibmaterial 8 aufgebracht, wie es in Fig. 11 zu sehen ist. Wie oben erläutert, wird bei der Fertigung das Trägerelement 7 in ein Presswerkzeug eingelegt und das Reibmaterial 8 um das Trägerelement 7 herum angeordnet. Durch Einwirkung und Druck und Hitze beim Pressen ergibt sich ein fester und stabiler Verbund zwischen Reibmaterial 8 und Trägerelement 7.

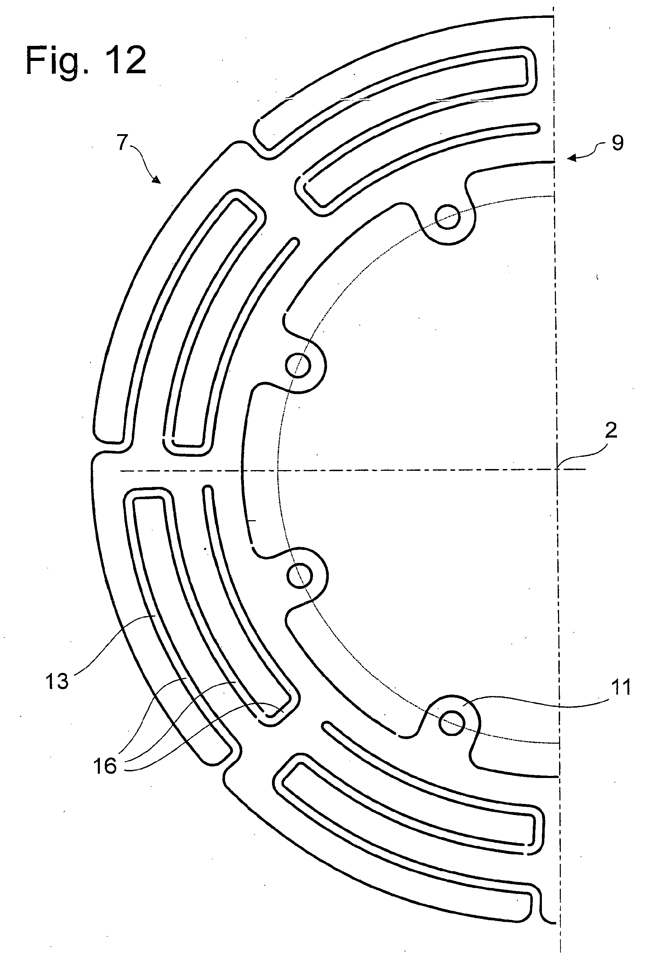

Aus Fig. 12 geht hervor, dass die Ausnehmungen auch als mäanderförmig verlaufende Schlitze 16 ausgebildet werden können, sie sich vom radial äußeren Bereich des Trägerelements 7 nach innen erstrecken.

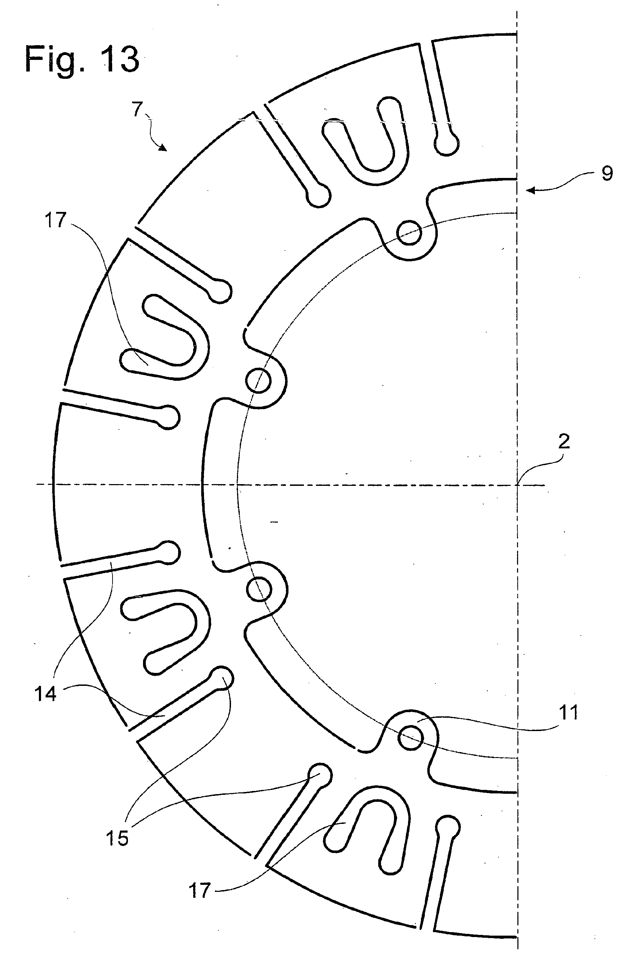

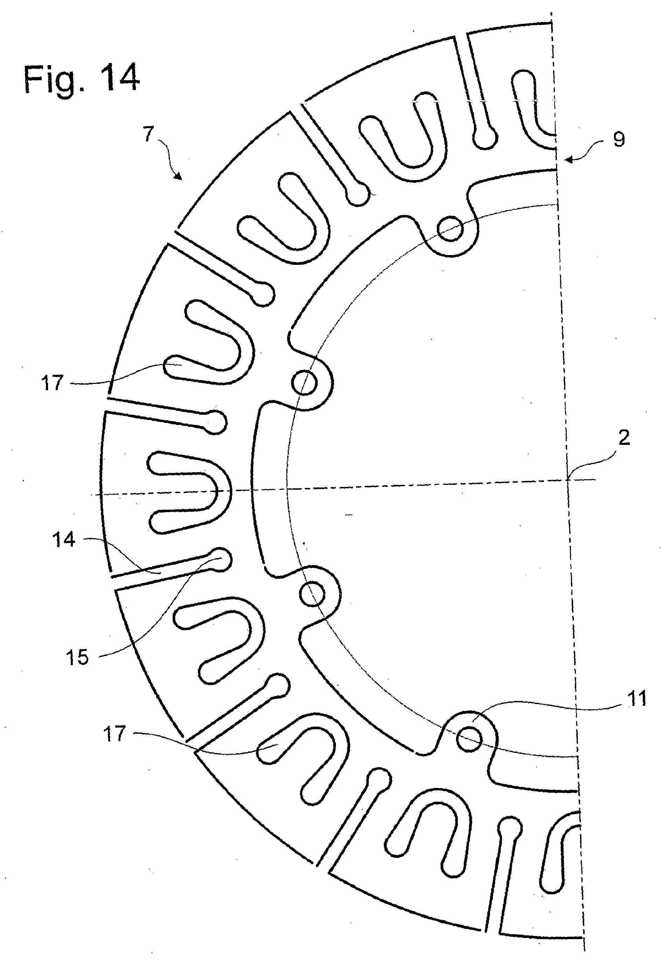

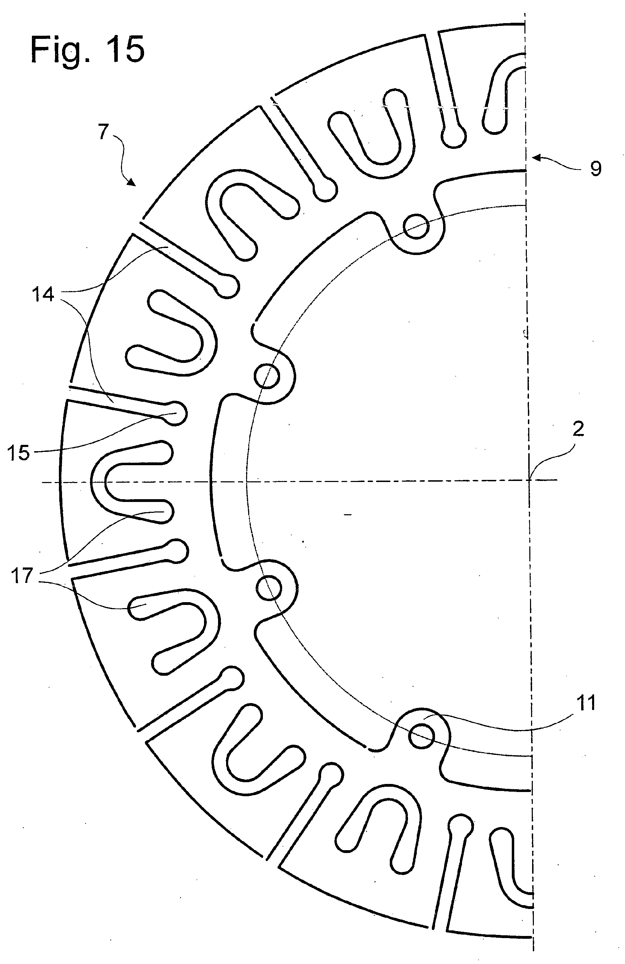

Fig. 13 zeigt U-förmig ausgebildete eingestanzte Ausnehmungen 17, wobei benachbart zu diesen beidseitig je eine sich radial erstreckende Ausnehmung 14 angeordnet ist. Fig. 14 zeigt eine hierzu ähnliche Ausgestaltung. Die U-förmige Ausnehmung 17 kann auch - von der Ausrichtung her betrachtet - über dem Umfang alternierend verlaufen, wie es Fig. 15 zeigt.

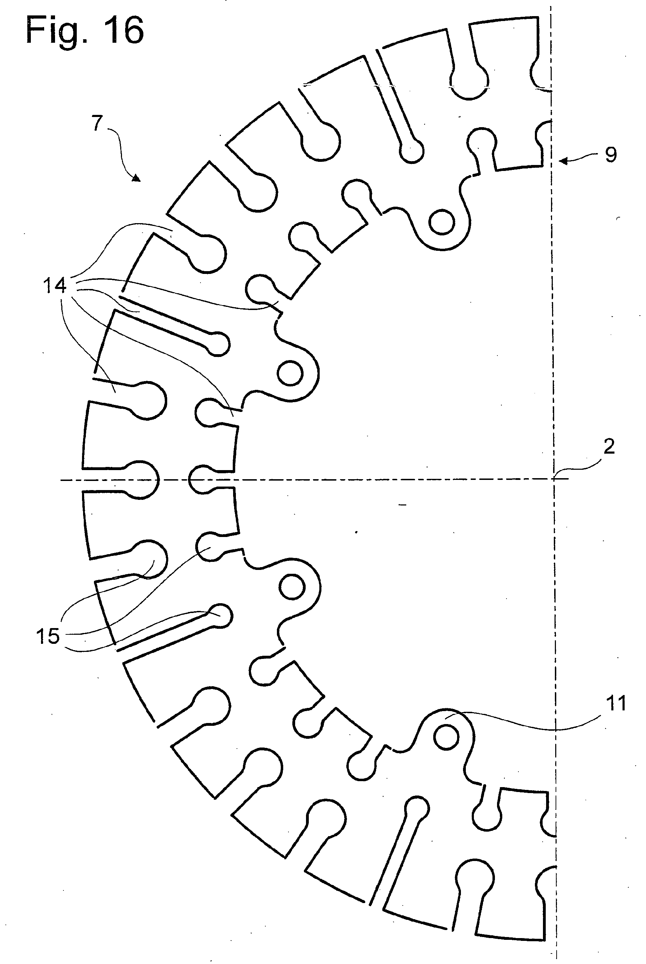

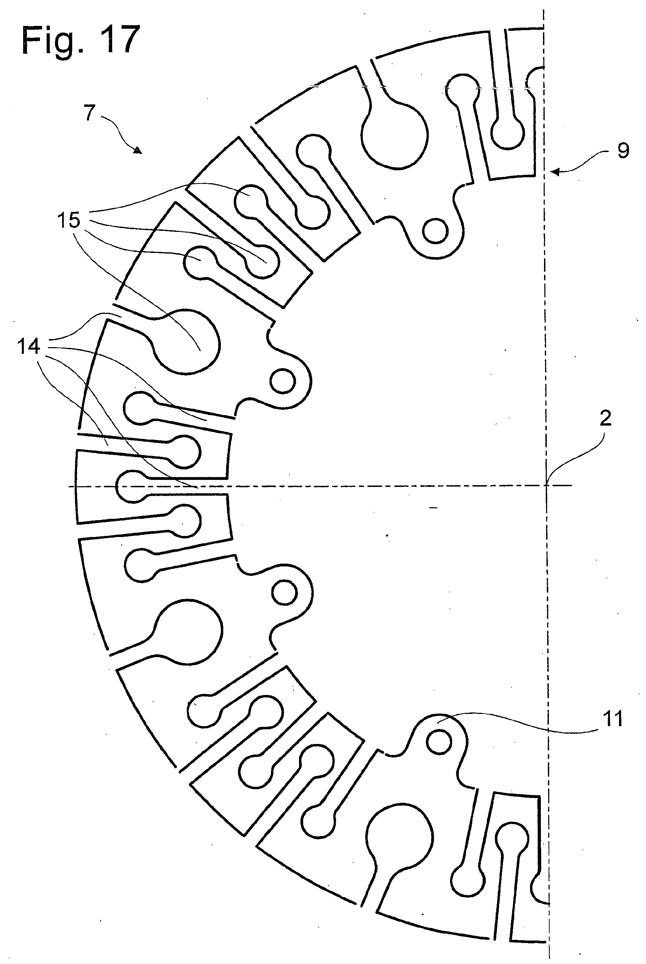

Weitere Vorschläge für die Anordnung der Ausnehmungen im Trägerelement 7 zeigen die Figuren 16 und 17. Namentlich Fig. 17 zeigt, dass das Trägerelement 7 durch die Ausnehmungen 14, 15 erheblich geschwächt bzw. erleichtert werden kann, ohne, dass die Funktion beeinträchtigt wird.

### Bezugszeichenliste

- 1: Kupplungsscheibe
- 2: Drehachse
- 3: Belagträger
- 4: Stirnseite
- 5: Stirnseite
- 6: Reibbelag
- 7: Trägerelement
- 8: Reibmaterial
- 9: radial innenliegender Bereich
- 10: Niet
- 11: Öse
- 12: Reibfläche
- 13: Ausnehmung
- 14: sich radial erstreckende Ausnehmung
- 15: kreisförmig ausgebildete Erweiterung
- 16: mäanderförmig ausgebildete Ausnehmung
- 17: U-förmig ausgebildete Ausnehmung
- 18: Nabenteil
- B: radiale Erstreckung des Trägerelements
- D_{A}: äußerer Durchmesser des Trägerelements
- D_{I}: innerer Durchmesser des Trägerelements

## Patentansprüche

1. Kupplungsscheibe (1) für eine Kupplungseinrichtung, insbesondere für eine Kraftfahrzeugkupplungseinrichtung, umfassend einen um eine Drehachse (2) herum angeordneten und im wesentlichen scheibenförmig ausgebildeten Belagträger (3), an dem, vorzugsweise an beiden seiner Stirnseiten (4, 5), mindestens ein Reibbelag (6) befestigt ist,
**dadurch gekennzeichnet,**
**dass** der Reibbelag (6) ein Trägerelement (7) aufweist, das von Reibmaterial (8) zumindest teilweise umgeben ist, wobei das Trägerelement (7) mit dem Belagträger (3) verbunden ist.

2. Kupplungsscheibe nach Anspruch 1, **dadurch gekennzeichnet, dass** das Trägerelement (7), gegebenenfalls abgesehen von seinem radial innenliegenden und/oder radial außenliegenden Bereich (9), vollständig von Reibmaterial (8) umgeben ist.

3. Kupplungsscheibe nach Anspruch 1 oder 2, **dadurch gekennzeichnet, dass** das Trägerelement (7) zumindest weitgehend eben ausgebildet ist.

4. Kupplungsscheibe nach Anspruch 1 oder 2, **dadurch gekennzeichnet, dass** das Trägerelement (7) eine leicht wellige Form aufweist

5. Kupplungsscheibe nach einem der Ansprüche 1 bis 4, **dadurch gekennzeichnet, dass** das Trägerelement (7) aus hochfestem Material besteht.

6. Kupplungsscheibe nach Anspruch 5, **dadurch gekennzeichnet, dass** das Trägerelement (7) aus Stahl besteht.

7. Kupplungsscheibe nach einem der Ansprüche 1 bis 6, **dadurch gekennzeichnet, dass** das Trägerelement (7) und der Belagträger (3) mittels einer Nietverbindung (10) miteinander verbunden sind.

8. Kupplungsscheibe nach einem der Ansprüche 1 bis 7, **dadurch gekennzeichnet, dass** das Trägerelement (7) mindestens eine Öse (11) zum Durchtritt eines Niets (10) aufweist.

9. Kupplungsscheibe nach Anspruch 8, **dadurch gekennzeichnet, dass** die mindestens eine Öse (11) radial innerhalb oder radial außerhalb der Reibfläche (12) des Reibbelags (6) angeordnet ist.

10. Kupplungsscheibe nach einem der Ansprüche 1 bis 9, **dadurch gekennzeichnet, dass** die Reibfläche (12) eine Ringfläche oder ein Aingfiächensegment bildet.

11. Kupplungsscheibe nach einem der Ansprüche 1 bis 10, **dadurch gekennzeichnet, dass** das Trägerelement (7) eine weitgehend kreisringförmige Kontur aufweist.

12. Kupplungsscheibe nach einem der Ansprüche 1 bis 10, **dadurch gekennzeichnet, dass** das Trägerelement (7) die Form eines Kreisringsegments aufweist.

13. Kupplungsscheibe nach einem der Ansprüche 1 bis 12, **dadurch gekennzeichnet, dass** das Trägerelement (7) mindestens eine Ausnehmung (13), vorzugsweise eine Anzahl Ausnehmungen (13), aufweist.

14. Kupplungsscheibe nach Anspruch 13, **dadurch gekennzeichnet, dass** die mindestens eine Ausnehmung (13) als das Trägerelement (7) vollständig durchsetzender Schlitz ausgebildet ist.

15. Kupplungsscheibe nach Anspruch 13 oder 14, **dadurch gekennzeichnet, dass** eine Anzahl Ausnehmungen (14) vorhanden sind, die sich über einen Teil der radialen Erstreckung (B) des Trägerelements (7) radial vom äußeren Durchmesser (D_{A}) des Trägerelements (7) nach innen erstrecken.

16. Kupplungsscheibe nach einem der Ansprüche 13 bis 15, **dadurch gekennzeichnet, dass** eine Anzahl Ausnehmungen (14) vorhanden sind, die sich über einen Teil der radialen Erstreckung (B) des Trägerelements (7) radial vom inneren Durchmesser (D_{I}) des Trägerelements (7) nach außen erstrecken.

17. Kupplungsscheibe nach Anspruch 15 oder 16, **dadurch gekennzeichnet, dass** am Ende der Ausnehmungen (14) eine kreisförmig ausgebildete Erweiterung (15) angeordnet ist.

18. Kupplungsscheibe nach Anspruch 15 und 16, **dadurch gekennzeichnet, dass** sich radial nach innen erstreckende und sich radial nach außen erstreckende Ausnehmungen (14) über den Umfang des Trägerelements (7) abwechselnd angeordnet sind.

19. Kupplungsscheibe nach Anspruch 13 oder 14, **dadurch gekennzeichnet, dass** eine Anzahl Ausnehmungen (16) vorhanden ist, die in Achsrichtung des Trägerelements (7) betrachtet mäanderförmig verlaufen, wobei sich der mäanderförmige Verlauf über einen Teil der radialen Erstreckung (B) des Trägerelements (7) ausdehnt.

20. Kupplungsscheibe nach Anspruch 13 oder 14, **dadurch gekennzeichnet, dass** eine Anzahl Ausnehmungen (17) vorhanden ist, die in Achsrichtung des Trägerelements (7) betrachtet eine U-förmige Kontur aufweisen.

21. Kupplungsscheibe nach Anspruch 20, **dadurch gekennzeichnet, dass** die U-förmig ausgebildeten Ausnehmungen (17) gleichsinnig über den Umfang des Trägerelements (7) angeordnet sind,

22. Kupplungsscheibe nach Anspruch 20, **dadurch gekennzeichnet, dass** die U-förmig ausgebildeten Ausnehmungen (17) abwechselnd gegensinnig über den Umfang des Trägerelements (7) angeordnet sind.

23. Kupplungsscheibe nach Anspruch 15 oder 16 und einem der Ansprüche 20 bis 22, **dadurch gekennzeichnet, dass** sich radial erstreckende (14) und U-förmig ausgebildete Ausnehmungen (17) über den Umfang des Trägerelements (7) abwechseln.

24. Verfahren zur Herstellung einer Kupplungsscheibe (1) für eine Kupplungseinrichtung, insbesondere für eine Kraftfahrzeugkupplungseinrichtung, die einen im wesentlichen scheibenförmig ausgebildeten Belagträger (3) und mindestens einen Reibbelag (6) aufweist, insbesondere nach einem der Ansprüche 1 bis 23,
**dadurch gekennzeichnet,**
**dass** der Reibbelag (6) hergestellt wird durch
a) Einlegen eines Trägerelements (7) in ein Presswerkzeug,
b) Umgeben des Trägerelements (7) mit Reibmaterial (8) und
c) anschließendes Pressen des Reibmaterials (8) und des Trägerelements (7), so dass eine feste Verbindung zwischen Reibmaterial (8) und Trägerelement (7) entsteht.

25. Verfahren nach Anspruch 24, **dadurch gekennzeichnet, dass** das Reibmaterial (8) und das Trägerelement (7) bei Schritt c) gemäß Anspruch 24 auf eine gegenüber der Umgebungstemperatur erhöhte Temperatur gebracht werden.
